(19)

Europäisches Patentamt

European Patent Office

Office européen des brevets

(11) **EP 3 822 847 A1**

(12) **EUROPEAN PATENT APPLICATION**

(43) Date of publication:
**19.05.2021 Bulletin 2021/20**

(51) Int Cl.:
**G06K 9/00** (2006.01)      **G06Q 10/06** (2012.01)

(21) Application number: **20210480.8**

(22) Date of filing: **28.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2018   GR 20180100545**

(62) Document number(s) of the earlier application(s) in
accordance with Art. 76 EPC:
**19160156.6 / 3 660 732**

(71) Applicant: **Secondmind Limited
Cambridge, Cambridgeshire CB2 1LA (GB)**

(72) Inventors:
• **GRANT, James
Cambridge, Cambridgeshire CB2 1LA (GB)**

• **BOUKOUVALAS, Alexis
Cambridge, Cambridgeshire CB2 1LA (GB)**
• **LESLIE, David
Cambridge, Cambridgeshire CB2 1LA (GB)**
• **MUNOZ DE COTE, Enrique
Cambridge, Cambridgeshire CB2 1LA (GB)**
• **JOHN, Sebastian
Cambridge, Cambridgeshire CB2 1LA (GB)**
• **VAKILI, Sattar
Cambridge, Cambridgeshire CB2 1LA (GB)**

(74) Representative: **EIP
Fairfax House
15 Fulwood Place
London WC1V 6HU (GB)**

Remarks:
This application was filed on 27-11-2020 as a
divisional application to the application mentioned
under INID code 62.

(54) **METHOD AND SYSTEM FOR ADAPTIVE SENSOR ARRANGEMENT**

(57)     There is provided a computer-implemented method for arranging one or more sensor devices for detecting events within a domain having one or more dimensions. The method includes iteratively: determining a plurality portions spanning the domain; estimating a normalised rate of events being detected in each portion; selecting, in dependence on the estimated normalised rates, one or more of the determined portions on the basis of an expected reward associated with allocating the one or more sensor devices to the selected one or more portions; arranging the one or more sensor devices to detect events in the selected one or more portions; and receiving event data from the one or more sensor devices, the event data being indicative of dimensional co-ordinates of events detected by the one or more sensor devices within the selected one or more portions. The expected reward depends on an expected rate of events being detected by the one or more sensor devices, penalised by a sensing cost associated with the one or more sensor devices, and the number of determined portions increases with respect to the number of iterations in accordance with a predetermined relationship.

Fig. 1

**Description**

Technical Field

The present invention relates to a method and system for arranging sensor devices for detecting events within a domain

Background

It has been proposed to use automated sensor devices to gather data that is processed to identify the occurrence of events occurring in a variety of physical systems. For example, in surveillance operations a fleet of unmanned aerial vehicles (UAVs) may be used to deploy cameras to image a border or region to detect intrusions or other prohibited activities. In astronomy, automated telescopes may be used to detect cosmological events. Automated sensor devices may detect events automatically, or alternatively may stream data to a computer system arranged to detect events within the streamed data.

There is generally a cost associated with operating a sensor device. For example, there is a computational cost associated with processing data generated by a digital camera. In examples where a sensor device illuminates a region, for example using an infra-red source, there is an energy cost associated with illuminating the region. The cost of operation may increase with the number of deployed sensor devices. The physical capabilities of a sensor device may constrain the extent and/or shape of regions that the sensor device can be used to detect events in. In many applications, the cost of operating a sensor device depends on an extent of the region and/or the duration of time for which the sensor device is deployed. Accordingly, it may be impractical or impossible to allocate sensor devices to detect events within the entirety of a domain of interest.

For most applications, the rates at which events occur at different co-ordinates within a domain of interest is *a priori* unknown. Therefore, the rates at which events occur at different co-ordinates must be estimated on the basis of events detected by sensor devices. As more events are detected, the estimated rates will be updated, and therefore it will be desirable to allocate the sensor devices dynamically, to take advantage of the progressively improving rate estimates.

Dynamically allocating sensor devices to detect events within a domain leads to an exploration-exploitation dilemma. If the sensor devices are always allocated to subdomains where the most events are expected to occur, the sensor devices will not gather event data for other portions of the domain, and no insight will be gained into the rate of in events occurring in those portions. By contrast, if sensor devices are allocated to excessively large subdomains, or to subdomains that are chosen with too much variance, the cost of operating the sensor devices will be high for the number of events detected.

Summary

According to a first aspect of the present invention, there is provided a computer-implemented method for arranging one or more sensor devices for detecting events within a domain having one or more dimensions. The method includes iteratively: determining a plurality portions spanning the domain; estimating a normalised rate of events being detected in each portion; selecting, in dependence on the estimated normalised rates, one or more of the determined portions on the basis of an expected reward associated with allocating the one or more sensor devices to the selected one or more portions; arranging the one or more sensor devices to detect events in the selected one or more portions; and receiving event data from the one or more sensor devices, the event data being indicative of dimensional co-ordinates of events detected by the one or more sensor devices within the selected one or more portions. The expected reward depends on an expected rate of events being detected by the one or more sensor devices, penalised by a sensing cost associated with the one or more sensor devices. The number of determined portions increases with respect to the number of iterations in accordance with a predetermined relationship.

By increasing the number of determines portions in accordance with a predetermined relationship, the provided method automatically provides a solution to the exploration-exploitation dilemma inherent to the problem of arranging sensor devices.

Further features and advantages of the invention will become apparent from the following description of preferred embodiments of the invention, given by way of example only, which is made with reference to the accompanying drawings.

Brief Description of the Drawings

Figure 1 shows an example of two UAVs being arranged to detect events in a one-dimensional spatial domain.

Figure 2 shows an example of two UAVs being arranged to detect events in a two-dimensional spatial domain.

Figure 3 shows an example of a sensor device being arranged to detect events in a temporal domain.

Figure 4 is a flow diagram representing an example of a method of arranging sensor devices for detecting events in a domain.

Figure 5 shows an example of portions spanning a one-dimensional spatial domain.

Figure 6 shows plots of Bayesian regret against number of iterations for two examples of the present invention.

Figure 7 shows results of allocating sensor devices in accordance with two examples of the present invention.

Figure 8 is a flow diagram representing an example of a method for estimating a normalised rate of events being detected within a portion of a domain.

Figure 9 is a flow diagram representing a further example of a method for estimating a normalised rate of events being detected within a portion of a domain.

Figure 10 shows results of allocating sensor devices in accordance with two further examples of the present invention.

Figure 11 shows a computer system arranged to perform a method in accordance with the present invention.

Detailed Description

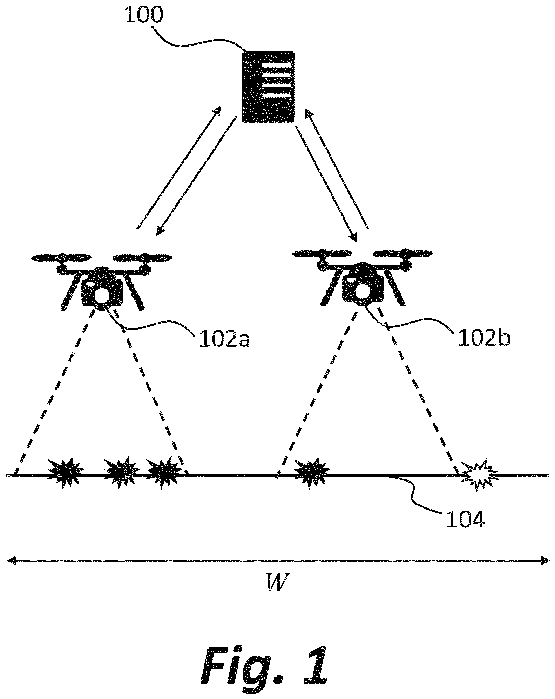

Figure 1 shows an example in which a computer system 100 is communicatively coupled to two UAVs 102a and 102b, referred to collectively as UAVs 102. In this example, the UAVs 102 communicate with the computer system 100 over a wireless network, for example a Long Term Evolution (LTE) wireless network. In other examples, a UAV may communicate with a computer system using alternative means, for example over a Wi-Fi network or using Bluetooth or other radio signals. The UAVs 102 are examples of sensor devices, and in this example are arranged to detect events within a domain 104 having a single spatial dimension. The extent of the domain 104 is given by the width W. The UAVs 102 are equipped with global positioning system (GPS), and accordingly are able to associate dimensional co-ordinates with the detected events. Each of the UAVs 102 includes an image sensor device and is arranged to detect events within a continuous subdomain of the domain 104 by processing image data captured by the image sensor device. According to the present invention, the computer device 100 dynamically allocates the UAVs 102 in dependence on event data corresponding to events that have been detected within the domain 104. There is a sensing cost associated with operating the UAVs 102, which in the present example is proportional to the width or extent of the subdomains to which the UAVs 102 are allocated. The extent of the subdomains may be altered during the dynamic allocation of the UAVs 102. In this present example, the domain 104 is a border of a security-controlled facility, and the UAVs 102 are deployed at night to automatically detect intrusion events along the border, in which an unauthorised person attempts to enter the security-controlled facility. In the present example, the allocated subdomains are updated one or more times each night in accordance with the methods described hereafter.

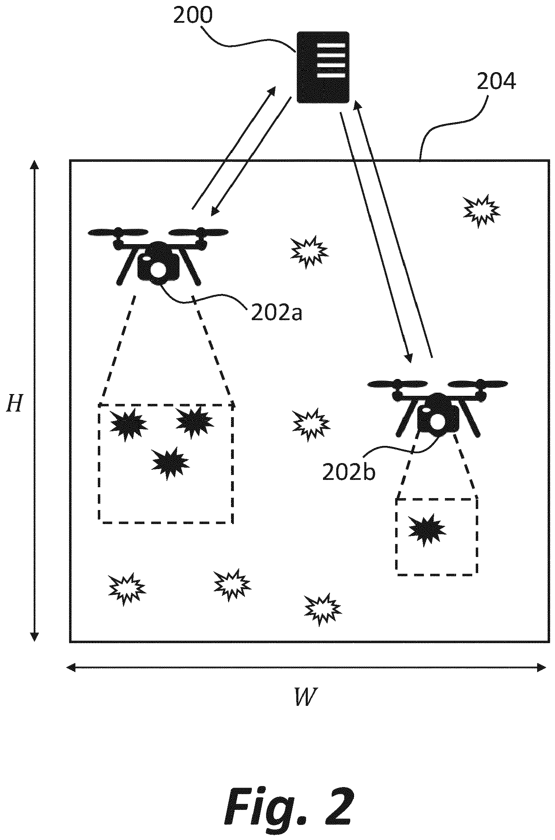

Figure 2 shows an example in which a computer system 200 is communicatively coupled to two UAVs 202a and 202b, referred to collectively as UAVs 202. In this example, the UAVs 202 are arranged to detect events in a domain 204 having two spatial dimensions. The extent of the domain 204 is given by the area $H \times W$ of the domain. Each of the UAVs 202 is arranged to detect events within a square subdomain of the domain 204. The computer device 200 dynamically allocates the UAVs 202 in dependence on event data corresponding to events that have been detected within the domain 204. There is a sensing cost associated with operating the UAVs 202, which in the present example is proportional to the area or extent of the subdomains to which the UAVs 202 are allocated. The extent of the subdomains may be altered during the dynamic allocation of the UAVs 202. In this present example, the domain 204 is a region of a nature reserve, and the UAVs 202 are deployed at night to detect poaching events within the region. In the present example, the allocated subdomains are updated one or more times each night in accordance with the methods described hereafter.

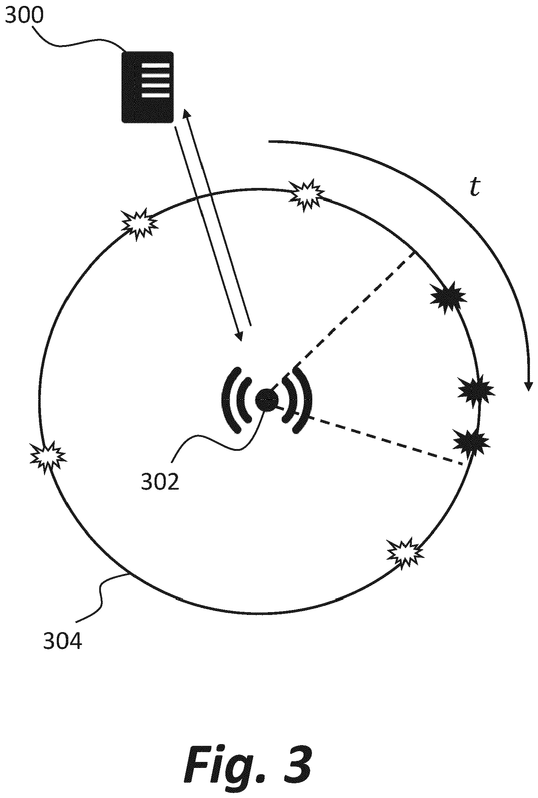

Figure 3 shows an example in which a computer system 300 is communicatively coupled to a sensor device 302 which is used to detect events occurring within a domain 304 having a single periodic temporal dimension. A single period of the domain 304 in this example corresponds to a single day, and the rate at which events are expected to occur depends on the time of day. In other examples, a single period of a periodic temporal domain may correspond to a year, and a rate at which events are expected to occur may depend on a time of year. In the present example the sensor device 302 is used to detect events occurring at a single location, but only at certain times of day.

The computer device 300 dynamically allocates the sensor device 302 to subdomains of the temporal domain 304 in dependence on event data corresponding to events that have been detected within previous periods of the domain 304. There is a sensing cost associated with operating the sensor device 302, which in the present example is proportional to the duration or extent of the subdomains to which the sensor device 302 is allocated. The extent of the subdomains may be altered during the dynamic allocation of the sensor device 302.

The present invention provides a computer-implemented method of arranging one or more sensor devices for detecting events within a domain. Within the meaning of the present disclosure, a sensor device is an automated agent that is capable of observing discrete events. Sensor devices may include one or more sensors, for example image sensing devices such as cameras, audio sensing devices such as microphones, and/or devices for detecting faults or other events within a communications network or within electrical circuitry. A sensing cost is associated with deploying and operating the sensor devices, resulting in a need to balance the desire to detect as many events as possible with the desire to minimise the sensing cost associated with operating the sensor devices. More precisely, a computer system is set the task of maximising a cumulative expected reward, where the reward is given by the rate at which events are detected within the domain $D$, penalised by the sensing cost. The method proceeds under the assumption that the events are distributed according to a non-homogeneous Poisson process with a rate function $\lambda: D \to \mathbb{R}_+$ that varies within the domain $D$. According to the present method, at each of a sequence of iterations $t = 1, 2, ...,$ the computer system sends a control signal to each of the one or more sensor devices, causing the one or more sensor devices to be arranged to detect events in a union $A_t$ of continuous subdomains of the domain $D$. Each iteration is associated with an interval of fixed duration, such that the devices are arranged to detect events in each union $A_t$ for an equal duration.

In some examples (such as the examples of Figures 1 and 2), each sensor device is capable of detecting events in a single continuous subdomain. In other examples (such as the example of Figure 3), each sensor device is capable of detecting events in more than one continuous subdomains. In any case, the method proceeds on the basis that the union $A_t$ contains at most $U$ continuous subdomains, where $U$ is a predetermined integer. In the examples of Figures 1 and 2, $U$ corresponds to the number of sensor devices. It is assumed that the sensor devices will detect any event that occurs in the union $A_t$. The expected rate at which events will be detected by the sensor devices between iterations $t$ and $t + 1$ is given by Equation (1):

$$\mathbb{E}(\text{rate of detection}) = \int_{A_t} \lambda(x)\, \mathrm{d}x. \tag{1}$$

The expected reward received in the interval associated with iteration $t$. is given by the expected rate of events being detected, penalised by the sensing cost. In an example, the sensing cost depends on the extent of the union $A_t$ of subdomains. In a specific example, the sensing cost is proportional to extent of the union $A_t$, and the expected reward is given by Equation (2):

$$r(A_t) = \mathbb{E}(\text{rate of detection}) - \int_{A_t} C\, \mathrm{d}x = \int_{A_t} (\lambda(x) - C)\, \mathrm{d}x, \tag{2}$$

where $C$ is the sensing cost per unit extent of the union $A_t$. In other examples, the sensing cost may depend on the extent of the union $A_t$ according to an alternative predetermined relationship, for example an exponential relationship.

The rate function $\lambda(x)$ is unknown, and in the present method Bayesian inference is used to estimate $\lambda(x)$ at each iteration. The efficacy of the method may be characterised by the Bayesian regret, which is a measurement of how much the cumulative expected reward differs from the optimal cumulative expected reward. The Bayesian regret for the first $T$ iterations is given by Equation (3):

$$BReg(T) = \sum_{t=1}^{T} \mathbb{E}(r(A^*) - r(A_t)) \tag{3}$$

where $A^*$ is the union of subdomains that maximises the expected reward of Equation (2), and where the expectation in Equation (3) is taken with respect to a prior probability distribution over the rate function $\lambda(x)$, as will be described in more detail hereafter. The objective of the present method is to minimise the Bayesian regret of Equation (3).

The task described above leads to an exploration-exploitation dilemma, in which the need to explore the domain $D$ in order to discover subdomains with high rates of events occurring must be balanced against the need to deploy sensors to detect events in subdomains that are already believed to have high rates of events occurring.

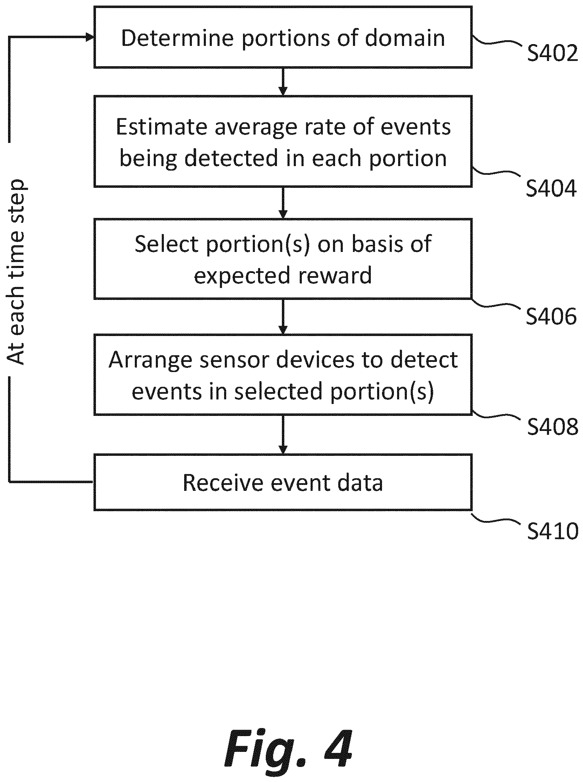

Figure 4 shows a method implemented by a computer system to arrange one or more sensor devices for detecting events in a domain in accordance with the present invention. At each iteration $t$, the computer device determines, at S402, one or more portions of the domain $D$. The portions are non-overlapping and span the entire domain $D$. In some examples, the determined portions have equal extents. For example, in a domain having one spatial dimension, the portions may be spatial intervals of equal length. In a domain having two spatial dimensions, the portions may be squares of rectangles of equal extent and shape. In a domain having a temporal dimension, the portions may be temporal intervals of equal duration. In other examples, the portions determined at a given iteration may have differing extents. As will be explained in more detail hereafter, the number of portions determined by the computer system will be increase as the number of iterations increases. At iteration $t$, the number of portions determined by the computer system is given by $K_t$, and the portions are labelled $B_{k,t}$ for $k = 1, ..., K_t$. As will be explained in more detail hereafter, the determined portions are used for binning of event data, such that events detected within each portion are effectively replaced by values representative of the portion as a whole.

The computer device estimates, at S404, a normalised rate $\psi_{k,t}$ of events of being detected in each portion $B_{k,t}$. The normalised rate is defined by Equation (4):

$$\psi_{k,t} = \frac{1}{|B_{k,t}|} \int_{B_{k,t}} \lambda(x)\, dx, \qquad (4)$$

where $|B_{k,t}|$ denotes the extent of the portion $B_{k,t}$. In other words, the normalised rate is given by the integral of the rate function over the portion, divided by the extent of the portion. The normalised rate is therefore equivalent to a mean value of the rate function within the portion.

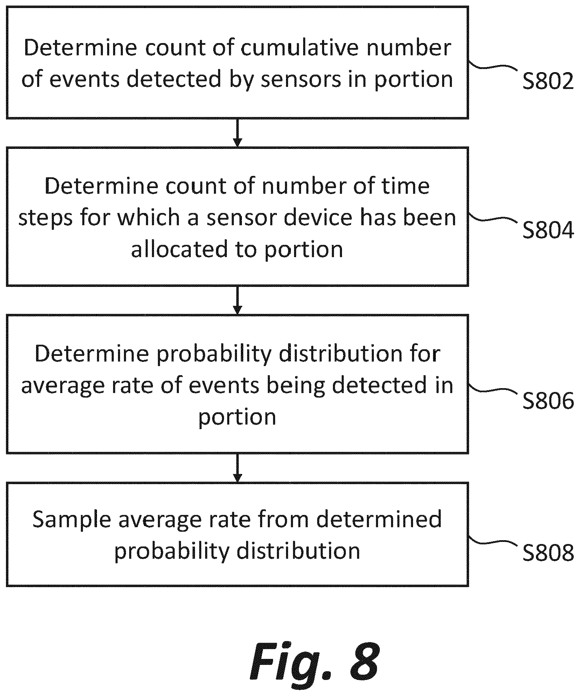

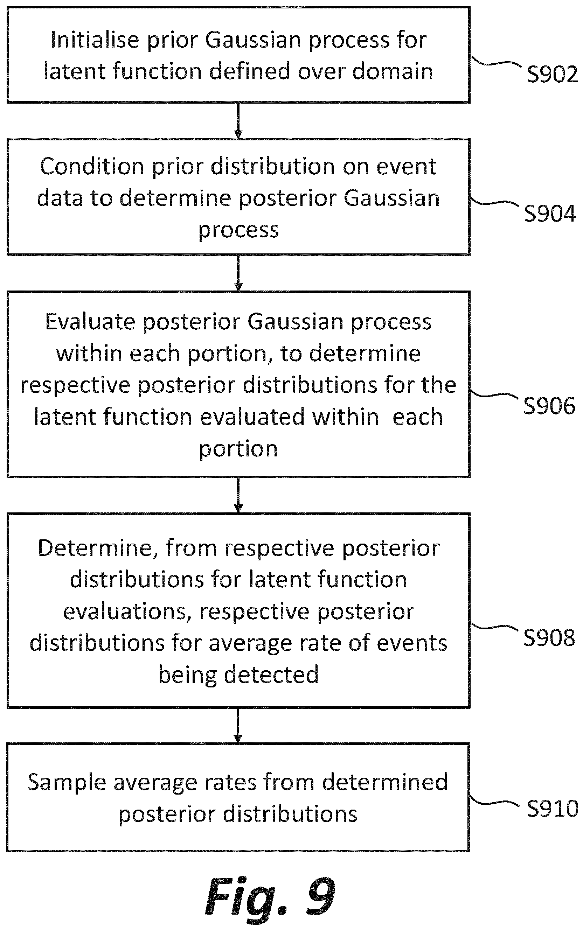

Estimating the normalised rate $\psi_{k,t}$ involves processing event data corresponding to events previously detected by the sensor devices. As will be explained in more detail hereafter, for each interval associated with an iteration, the sensor devices transmits event data to the computer device, indicative of events detected by the sensor devices, including the dimensional co-ordinates of the detected events. The computer device stores the event data cumulatively, and at each iteration uses the stored event data to estimate $\psi_{k,t}$. Examples of methods for estimating the normalised rate $\psi_{k,t}$ are described in more detail below, with reference to Figures 8 and 9.

The computer system selects, at S406, in dependence on the estimated normalised rates $\psi_{k,t}$, a union $A_t$ of continuous subdomains consisting of a subset of the portions $B_{k,t}$. The subset of portions is selected from all possible subsets of portions (given the constraint that the union $A_t$ must contain at most $U$ continuous subdomains, and that the continuous subdomains are permitted by any physical constraints imposed by the sensor devices) on the basis of the expected reward $r(A_t)$ associated with allocating the one or more sensor to the union $A_t$. More precisely, the computer system selects the union $A_t$ as a solution to the following optimisation problem:

- maximise the estimated reward associated with allocating the sensor devices to $U$ continuous subdomain of the domain $D$, such that
- each of the continuous subdomains consists of a subset of the determined portions $B_{k,t}$, and is permitted by the physical constraints imposed by the sensor device, and
- at most one sensor device is allocated to each of the determined portions $B_{k,t}$, where
- the estimated reward is determined by assuming that the normalised rate within each portion $B_{k,t}$ is given by the corresponding normalised rate estimated at S404.

In one implementation, the computer system precomputes, for each permitted continuous subdomain, an estimated reward associated with allocating a single sensor device to the subdomain, which converts the problem outlined above to an integer program that can be solved quickly using a standard linear program solver. It will be appreciated that other methods may be used to solve the optimisation problem without departing from the scope of the invention.

The computer system arranges, at S408, the one or more sensor devices to detect events in the selected union $A_t$ of subdomains. Arranging the one or more sensor devices generally involves sending control signals to the sensor devices. In the case of a domain having one or more spatial dimensions, the control signals may cause the sensor devices to move to appropriate locations within the domain, or otherwise to configure one or more associated sensors to detect events within the selected union $A_t$. In the case of a temporal domain, the control signals may cause a sensor device to activate one or more sensors for selected timeframes.

Having been arranged as described above, the one or more sensor devices generate event data indicative of events detected within the union $A_t$. The event data includes dimensional co-ordinates of the detected events in the domain $D$. In the case of a spatial dimension, a dimensional co-ordinate corresponds to a location. In the case of a temporal domain, a temporal co-ordinate corresponds to a time. The computer device receives, at S410, the event data from the one or more sensor devices. At the following iteration, the received event data will be taken into account when estimating the normalised rates at S404.

In the present method, the number of portions determined at S402 gradually increases with respect to the number of iterations in accordance with a predetermined relation. In other words, the domain $D$ is discretised progressively more finely as the computer device receives progressively more event data. Increasing the number of portions may involve, at certain iterations, dividing previously-determined portions into a predetermined number of sub-portions. By gradually increasing the number of portions, the method automatically provides a solution to the exploration-exploitation dilemma discussed above. Initially, when the computer system has received only a small amount of event data, the method favours exploration as the sensor devices are allocated to large subdomains. As progressively more event data is received, the determined portions become smaller, resulting in progressively more intricate selection of subdomains and a progressive shift towards exploitation. Using the present method, there is an inevitable contribution to the Bayesian regret due to the fact that the domain is discretised into portions at each iteration, because the optimal union $A*$ of subdomains is not likely to correspond exactly to a subset of the selected portions. By discretising the domain progressively more finely, the inevitable contribution due to discretisation eventually becomes insignificant. Furthermore, the estimated normalised rate of events being detected in each portion is expected to eventually converge to the true rate function $\lambda(x)$ evaluated within the portion. In some examples, the method includes determining, using predetermined convergence criteria, that the estimated normalised rate of events being detected in each portion has converged, in which case no further re-arranging of the sensing devices is performed.

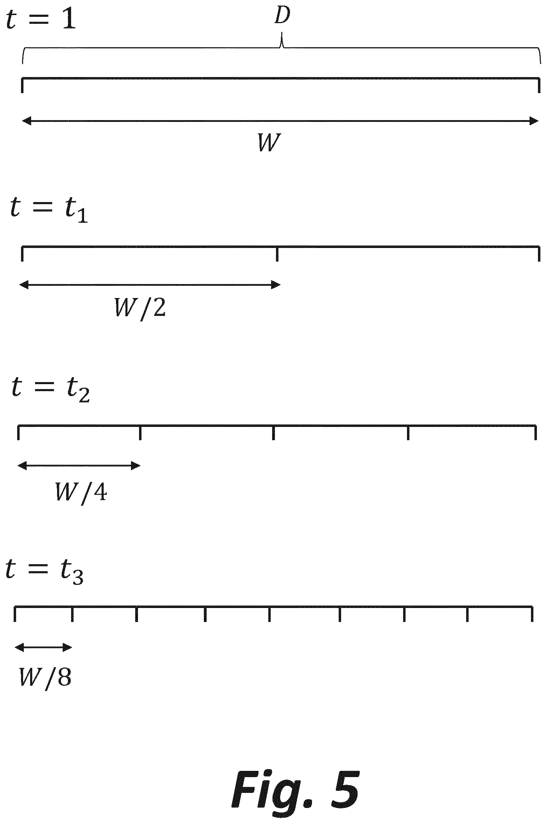

Figure 5 shows an example a domain $D$ having a single spatial dimension and an extent of $W$. In this example, at the initial iteration $t = 1$, a single portion of the domain $D$ is determined, spanning the entire extent $W$ of the domain. In other examples, more than one portion may be determined at the initial iteration. At later iterations $t_1$, $t_2$, $t_3$, ..., the domain is divided into progressively more portions of equal extent. In the present example, the number of portions is doubled at each of the iterations $t_1$, $t_2$, $t_3$, .... In some examples, the rate at which the number of determined portions increases is constant, or in other words the determined number of portions increases in proportion to the number of iterations, such that $K_t \propto t$. In the example of Figure 5, this is achieved if the iterations satisfy the iterative relationship $t_{i+1} = 2t_i$ for $i = 1, 2, 3, ...$ In other examples, the rate at which the determined number of portions increases may not be constant, and the determined number of portions may instead increase with the respect to the number of iterations in accordance with a nonlinear relationship. For example, the rate at which the determined number of portions increases may decrease with time, resulting in a sublinear relationship. An example of a sublinear relation is one in which the number of determined portions increases in proportion to a predetermined power of the number of iterations, the predetermined power being greater than zero and less than one, such that $K_t \propto t^\gamma$, where $0 < \gamma < 1$. In the example of Figure

$$t_{i+1}^{\gamma} = 2t_i^{\gamma}$$

5, this is achieved if the iterations satisfy the iterative relationship      for $i = 1, 2, 3, ...$

Increasing the determined number of portions in accordance a sublinear relationship is observed to result in improved performance of the method in comparison with increasing the determined number of portions in proportion to the number of iterations. The reason for this is that when the determined number of portions is increased in proportion to the number of iterations, after a few re-discretisations of the domain, most of the determined portions are associated with very little event data, and therefore the estimate of the normalised rate depends strongly on prior assumptions. Improved performance is observed when $K_t \propto t^\gamma$, where $0 < \gamma < 1$, for example $0.2 < \gamma < 0.5$, $0.3 < \gamma < 0.4$, or $\gamma \approx 1/3$. It can be shown that for a specific method of estimating the normalised rates being detected, described hereafter with reference to Figure 8, the choice of $\gamma = 1/3$ results in a Bayesian regret that is asymptotically bounded at $O(t^{2/3} \log^{1/2} T)$ as $T \rightarrow \infty$.

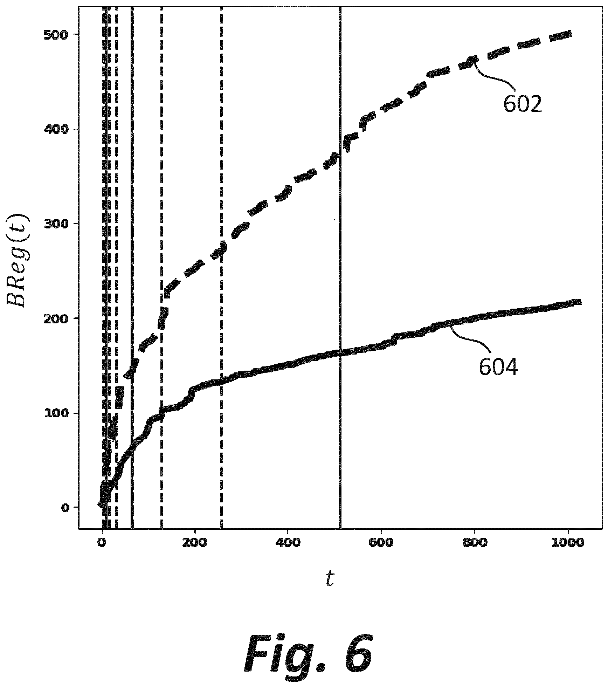

Figure 6 demonstrates the effect of the rate of re-discretisation of the domain D in a simulation corresponding to the example of Figure 5. For the simulation, events are generated according to a non-homogeneous Poisson process with a predetermined rate function $\lambda(x)$, and a single sensor device is arranged to detect the events, using the method described above. The domain is re-discretised according to the relationship $K_t \propto t^\gamma$, where $\gamma = 1$ for the dashed curve 602 and $\gamma = 1/3$ for the solid curve 604. The solid vertical lines correspond to iterations at which the domain is re-discretised for both the $\gamma = 1$ case and the $\gamma = 1/3$ case, and the dashed vertical lines correspond to iterations at which the domain is re-discretised only for the $\gamma = 1$ case. For the $\gamma = 1$ case, the domain is discretised at $t = 1, 2, 4, 8, ...$, and the corresponding numbers of portions are given by $K_t = 2, 4, 8, 16, ...$. For the $\gamma = 1/3$ case, the domain is discretised at $t = 1, 8, 64, 512, ...$, and the corresponding numbers of portions are given by $K_t = 4, 8, 16, 32, ...$. It is observed that the Bayesian regret is consistently lower for the sublinear $\gamma = 1/3$ case than for the linear $\gamma = 1$ case.

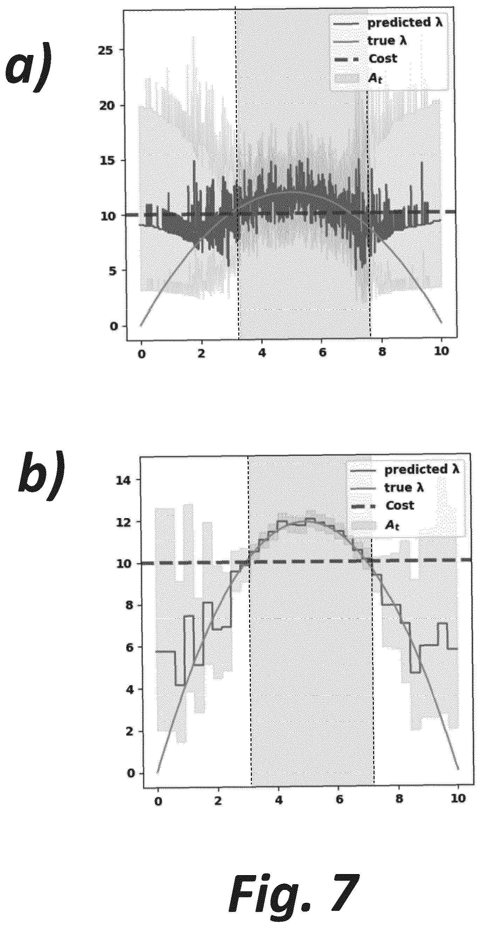

Figure 7 shows the state of the simulation described above with reference to Figure 6 at iteration $t = 1024$. Figure 7a corresponds to the linear case with $\gamma = 1$, and Figure 7b corresponds to the sublinear case with $\gamma = 1/3$. In each case, the smooth concave curve shows the predetermined rate function $\lambda(x)$, and the horizontal dashed line shows the cost $C$. The maximum reward $r(A_t)$ is achieved by arranging the sensor device to detect events in the subdomain for which $\lambda(x) > C$, which in this case corresponds to the subdomain $A* = [3,7]$. The region between the dashed vertical lines in each case corresponds to the subdomain $A_t$ selected according to the method described above. Figure 7 also shows, for each case, the predicted rate function, which is an expectation value for estimations of $\psi_{k,t}$ in each portion. It is observed that the predicted rate function in Figure 7b, corresponding to the sublinear case, closely approximates the actual rate function $\lambda(x)$ in each portion, whereas the predicted rate function in Figure 7a, corresponding to the linear case, differs significantly from the actual rate function $\lambda(x)$. As a result, the subdomain selected in Figure 7b is closer than the subdomain selected in Figure 7a to the optimal subdomain $A^*$. Accordingly, the Bayesian regret is lower for the sublinear case, even though the discretisation of the domain is considerable coarser at the iteration shown.

Figure 8 shows an example of a method performed by a computer system for estimating a normalised rate of events being detected in a portion $B_{k,t}$ of a domain $D$. In accordance with the method of Figure 4, the method of Figure 8 is performed at S404 for each iteration $t$. For each iteration $t > 1$, the method takes account of event data received before that iteration.

The computer system determines, at S802, a count $H_{k,t}$ of the cumulative number of events that have been detected in the portion $B_{k,t}$ before the iteration $t$. The count $H_{k,t}$ at iteration $t = 1$ may be zero for $k = 1, ..., K_1$ because the computer device has not yet received any event data. As mentioned above, for each interval between iterations, the computer device receives event data indicative of dimensional co-ordinates of detected events. The computer device stores the event data, and uses the stored event data to determine the count $H_{k,t}$ at each iteration $t > 1$.

The computer system determines, at S804, a count $N_{k,t}$ of the number of iterations for which a sensor device has been allocated to the portion $B_{k,t}$ before iteration $t$. The count $N_{k,t}$ at iteration $t = 1$ may be zero for $k = 1, ..., K_t$ because the sensor devices have not been allocated to any portions before the iteration $t = 1$.

The computer system determines, at S806, a probability distribution for the normalised rate $\psi_{k,t}$ of events being detected in the portion $B_{k,t}$ using the count $H_{k,t}$ and the count $N_{k,t}$. In a specific example, the probability distribution is a gamma distribution, as shown in Equation (5):

$$\psi_{k,t} \sim \Gamma\left(\alpha + H_{k,t}, \beta + N_{k,t} \big| B_{k,t}\big|\right), \tag{5}$$

where $\alpha$, $\beta$ are prior parameters of the Gamma distribution, and $|B_{k,t}|$ is the extent of the portion $B_{k,t}$ (for example, in the case of a one-dimensional domain divided into $K_t$ equal portions, the extent of a portion is given by $|B_{k,t}| = 1/K_t$). The prior parameters are chosen in dependence on a prior belief about the number of events that will be detected in each region. Provided the prior parameters $\alpha$, $\beta$ are not chosen to be too large, the mean of the probability distribution of Equation (5) will tend to $H_{k,t}/N_{k,t}$, which is the empirical mean rate of events being detected in the portion $B_{k,t}$. It will be appreciated that other forms of probability distribution could be used instead of the Gamma distribution shown in Equation (5), for example a normal distribution with mean and variance that depend on the counts $N_{k,t}$ and $H_{k,t}$.

The computer system samples, at S808, a normalised rate $\psi_{k,t}$ in accordance with the probability distribution determined at S806. The estimated normalised rate is then given by the sampled normalised rate. In other words, the estimated normalised rate is given by a random sample drawn from the probability distribution determined at S806.

Figure 9 shows a second example of a method performed by a computer system for estimating a normalised rate of events being detected in a portion $B_{k,t}$ of a domain $D$. The computer system initialises, at S902, a prior Gaussian process for a latent function $f(x)$ defined over the entire domain $D$, such that $f(x) \sim \text{GP}(0, k(x,x'))$ for a predetermined kernel $k(x,x')$. The unknown rate function $\lambda(x)$ is related to the latent function $f(x)$ in accordance with a predetermined functional relationship. In one example, the rate function is given by the natural exponent of the latent function, such that $\lambda(x) = \exp(f(x))$. In another example, the rate function is given by a quadratic function of the latent function, such that $\lambda(x) = (f(x) + \delta)^2$, where $\delta$ is a parameter. The kernel $k(x,x')$ may be, for example, a squared exponential kernel, a Matérn kernel, a periodic kernel, or any other suitable form of kernel. In a specific example, the kernel is a Matérn kernel of half-integer order, which leads to attractive implementation properties, as will be explained in more detail hereafter. The prior Gaussian process may depend on hyperparameters of the kernel $k(x,x')$, in which case initialising the prior Gaussian process includes initialising the hyperparameters of the kernel $k(x,x')$.

The computer system conditions, at S904, the prior Gaussian process for the latent function $f(x)$ on event data indicative of locations of events detected by the one or more sensor devices, to determine a posterior Gaussian process.

The event data includes a set $X = \{x_n\}_{n=1}^N$ of $N$ points, each point corresponding to dimensional co-ordinates of an event detected within the domain $D$. Conditioning the prior Gaussian process on the event data results in a posterior Gaussian process for the latent function $f(x)$ such that $f(x)|X \sim \text{GP}(m_p(x), k_p(x,x'))$, where $m_p$, $k_p$ denote a posterior mean function and a posterior kernel respectively. Conditioning the prior Gaussian process on the event data involves application of Bayes theorem in the form of Equation (6):

$$p(\lambda(x)|X) = \frac{p(X|\lambda(x))p(\lambda(x))}{p(X)}, \tag{6}$$

where:

- $p(\lambda(x)|X)$ is the posterior distribution of the rate function $\lambda(x)$;
- $p(X|\lambda(x))$ is a probability distribution of the data $X$ conditioned on the function $\lambda(x)$, referred to as the likelihood;
- $p(\lambda(x))$ is a prior probability distribution of function $\lambda(x)$; and
- $p(X)$ is the marginal likelihood, which is calculated by marginalising the likelihood over the rate function $\lambda(x)$, such that $p(X) = \int p(X|\lambda(x))p(\lambda(x))\mathrm{d}\lambda$.

In the present example, the likelihood is given by Equation (7):

$$p\big(X\big|\lambda(x)\big) = \exp\left(-\int_\tau \lambda(x)\mathrm{d}x\right)\prod_{n=1}^{N}\lambda(x_n). \qquad (7)$$

In principle, conditioning the prior Gaussian process on the event data involves substituting $\lambda(x)$ for $f(x)$ in Equation (6) using the predetermined functional relationship between $\lambda(x)$ and $f(x)$, resulting in a posterior distribution $p(f(x)|X)$ for the latent function $f(x)$. In practice, the integral in the denominator of Equation (6) is intractable, so an alternative method must be used to condition the prior Gaussian process on the event data. In a specific example, conditioning the prior Gaussian process on the event data is achieved by first conditioning the prior Gaussian process on a set $U = \{u_m\}_{m=1}^{M}$ of $M$ inducing variables, where $M < N$. The inducing variables correspond to outputs of the latent function $f(x)$, and correspond to a set of $M$ inducing inputs. In a specific example, the inducing inputs are given by components $\phi_m(x)$ of a truncated Fourier basis spanning the domain $D$, and the inducing variables are given by the Reproducing Kernel Hilbert Space (RKHS) inner product of the latent function $f(x)$ with the components $\phi_m(x)$ of the truncated Fourier basis, i.e. $u_m \equiv \langle \phi_m, f(x)\rangle_H$. The inducing variables $U$ are distributed according to a variational distribution $q(U)$. In an example, the variational distribution is a multivariate normal distribution such that

$$q(U) = \mathcal{N}(U|m,\Sigma),$$

where the mean $m$ and the variance $\Sigma$ of the multivariate normal distribution are treated as variational parameters. Conditioning the prior Gaussian process on the inducing variables results in an intermediate Gaussian process given by Equation (8):

$$f(x)|U \sim \mathrm{GP}\Big(k_u(x)^{\mathrm{T}}K_{uu}^{-1}U, k(x,x') - k_u(x)^{\mathrm{T}}K_{uu}^{-1}k_u(x')\Big), \qquad (8)$$

where the vector function $k_u(x)$ has components given by the covariance of the inducing variables $u_m$ with latent function evaluations $f(x)$ under the kernel $k$, such that $k_u(x)[m] = \mathrm{cov}(u_m,f(x))$. The matrix $K_{uu}$ is defined as the covariance between the inducing variables under the kernel $k$, such that $K_{uu}[m,m'] = \mathrm{cov}(u_m, u_m')$. Marginalising the intermediate distribution of Equation (8) over the variational distribution $q(U)$ results in a variational Gaussian process $q(f(x))$ for the latent function $f(x)$ given by Equation (9):

$$q\big(f(x)\big) = \int q(U)q(f(x)|U)\mathrm{d}U$$

$$= \mathrm{GP}\Big(k_u(x)^{T}K_{uu}^{-1}m, k(x,x') + k_u(x)^{T}(K_{uu}^{-1}\Sigma K_{uu}^{-1} - K_{uu}^{-1})k_u(x')\Big). \qquad (9)$$

Conditioning the prior Gaussian process on the event data finally involves optimising the parameters of the variational Gaussian process, including the variational parameters $(m, \Sigma)$ and the hyperparameters of the kernel k, such that the variational Gaussian process for the latent function $f(x)$ fits the event data as closely as possible. In the example that the rate function is given by a quadratic function of the latent function, the parameter $\delta$ may also be optimised. The posterior Gaussian process $p(f(x)|X)$ is determined as the optimised variational Gaussian process.

In a specific implementation, referred to as variational Bayes, the parameters of the variational Gaussian process are optimised using a gradient-based optimisation method such that the Kuller-Leibler (KL) divergence between the Gaussian process $q(f(x))$ and the exact posterior $p(f(x)|X)$ is minimised, or equivalently such that a variational lower bound on the marginal likelihood $p(X)$ is maximised. In an example where the inducing inputs are given by components of a truncated Fourier basis, and where the kernel k is given by a Matérn kernel of half-integer order, the variational lower bound is tractable using standard results. In other examples, alternative methods may be used for optimising the parameters of the variational Gaussian process, for example expectation propagation, Laplace-based methods, or Renyi divergence minimisation

The computer system evaluates, at S906, the posterior Gaussian process $p(f(x)|X)$ within each of the determined portions $B_{k,t}$ to determine a respective posterior distribution for the latent function $f(x)$ evaluated within each of the determined portions. In one example, the computer system evaluates the posterior Gaussian process at the midpoint $x_{k,t}$ of each of the determined portions $B_{k,t}$ to determine a posterior distribution $p(f(x_{k,t})|X)$ for the latent function evaluated at the midpoints. In other examples, the computer may evaluate the latent function at alternative locations within the determined portions.

The computer system determines, at S908, respective posterior probability distributions $p(\psi_{k,t}|X) \equiv p(\lambda(x_{k,t})|X)$ for the normalised rate of events being detected in each of the determined portions $B_{k,t}$. The respective posterior distribution $p(\psi_{k,t}|X)$ is determined from the posterior distribution for the latent function $f(x)$ evaluated within each of the determined portions using the predetermined functional relationship between the rate function $\lambda(x)$ and the latent function $f(x)$.

The computer system samples, at S910, normalised rates $\psi_{k,t}$ in accordance with the posterior probability distributions determined at S908. The estimated normalised rate is then given by the sampled normalised rate. In other words, the estimated normalised rate is given by a random sample drawn from the probability distribution determined at S908.

The method of Figure 9 differs from the method of Figure 8 in that the normalised rates of events being detected in the individual portions are correlated due to the rate function $\lambda(x)$ being treated as continuous and smooth within the domain D. By contrast, in the method of Figure 8, the normalised rates are treated as being mutually independent. Treating the rate function $\lambda(x)$ as continuous and smooth may be appropriate for certain applications, and inappropriate for other applications. Accordingly, the methods of Figures 8 and 9 may each be more effective for certain applications. The method of Figure 9 is typically more computationally-expensive than the method of Figure 8. In particular, the step of conditioning the prior Gaussian process in Figure 9 requires significant computational resources. The method of Figure 8 may therefore be more appropriate when computational resources are scarce, for example in cases where the method is performed by a portable computer system such as a mobile phone or a laptop computer.

The methods of Figures 8 and 9 are both based on sampling approaches, where each estimated normalised rate of events being detected in a portion is given by a sample from a determined probability distribution. In other examples, alternative methods may be used for estimating the normalised rate. For example, in an $\varepsilon$-greedy approach, the estimated normalised rate is given by the mean rate $H_{k,t}/N_{k,t}$ with probability $p = 1 - \varepsilon$, and the estimated normalised rate is sampled from a determined probability distribution with $p = \varepsilon$, where $\varepsilon$ is a predetermined small parameter such that $0 < \varepsilon \ll 1$. In another example, the estimated rate may be determined on the basis of an upper confidence bound on the rate of events being detected. It is noted that a greedy approach, in which the estimated normalised rate is always given by the mean value $H_{k,t}/N_{k,t}$ always favours exploitation over exploration, and accordingly does not lead to good performance of the method. By contrast, the sampling approaches of Figures 8 and 9 balance exploration against exploitation, resulting in improved performance of the method, as measured by the Bayesian regret.

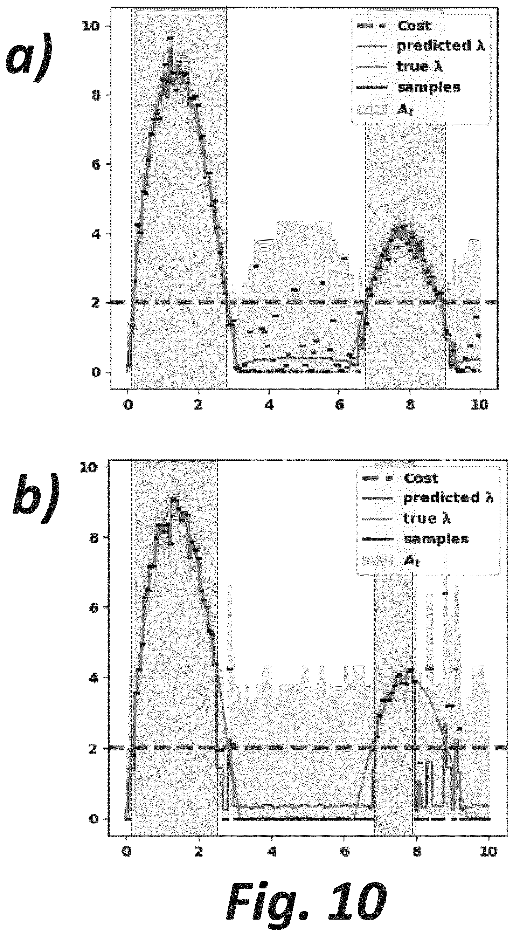

Figure 10 illustrates the performance of the method of Figure 4 in a simulation. In this example, two sensor devices are arranged to detect events generated in accordance with a predetermined bimodal rate function $\lambda(x)$. Figure 10a corresponds to the sampling approach described above with reference to Figure 8, and Figure 10b corresponds to an $\varepsilon$-greedy approach with $p = 0.01$. The plots of Figure 10 show the state of the simulation at iteration $t = 1000$. In each case, the piecewise concave curve shows the predetermined rate function $\lambda(x)$, and the horizontal dashed line shows the cost C. The maximum reward $r(A_t)$ is achieved by arranging the sensor device to detect events in the regions for which $\lambda(x) > C$, which in this case corresponds to the union of subdomains $A^* = [[0.13, 2.8], [6.75, 8.82]]$. The regions between the dashed vertical lines in each case corresponds to the subdomains selected using the corresponding method. Figure 10 also shows, for each case, the predicted rate function, which is an expectation value for estimates of $\psi_{k,t}$ for each portion. Figure 10 further shows the estimates of the rate function $\psi_{k,t}$ sampled at iteration $t = 1000$. It is observed that the sampling method of Figure 8 outperforms the $\varepsilon$-greedy approach in this example. This is due to the fact that the sampling method automatically provides a solution to the exploration-exploitation dilemma. By contrast, for the $\varepsilon$-greedy approach, the balance between exploration and exploitation is dependent on the user-selected parameter $\varepsilon$. This makes the sampling method more practical for real-life applications, where selecting the parameter $\varepsilon$ is not straightforward. Further, even for an empirically-optimal selection of the parameter $\varepsilon$, the $\varepsilon$-greedy method is outperformed by the sampling method of Figure 8.

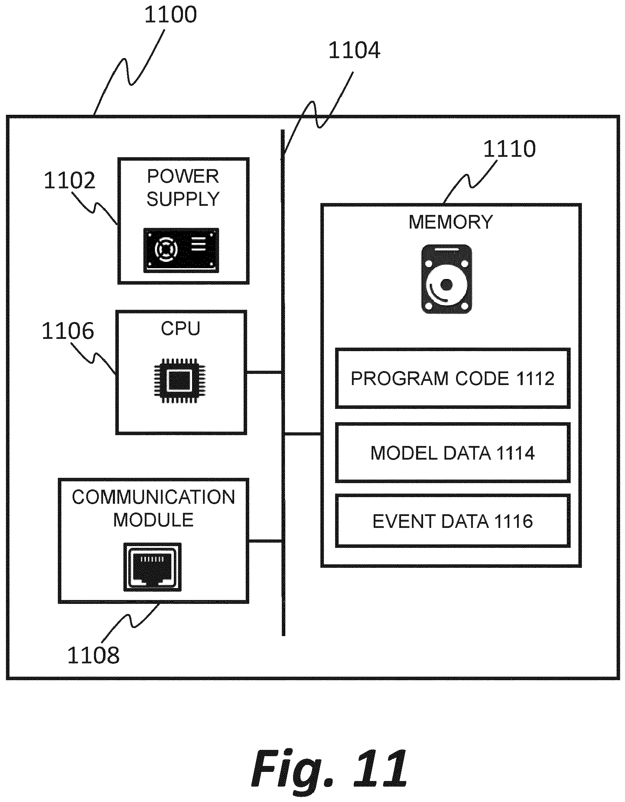

Figure 11 shows an example of a computer system 1100 arranged to implement a method in accordance with the present invention. The computer system 1100 includes a power supply 1102 and a system bus 1104. The system bus 1104 is connected to: a CPU 1106; a communication module 1108; and a memory 1110. The memory 1110 holds: program code 1112; model data 1114; and event data 1116. The model data 1114 includes parameters for determining probability distributions for the normalised rates $\psi_{k,t}$ (for example, prior parameters of the gamma distribution for the method of Figure 8, or hyperparameters of the kernel k for the method of Figure 9). Executing the program code 1112 causes the CPU 1106 to, at each of a sequence of iterations: process the event data 1116 and the model data 1114 in accordance with the method of Figure 4, to determine control signals for one or more sensor devices; and transmit the determined control signals to the one or more sensor devices using the communication module 1108. In the present example, the computer system 1100 is a single computer device. In other examples, the methods described herein may be performed by a distributed computer system.

The above embodiments are to be understood as illustrative examples of the invention. Further embodiments of the invention are envisaged. For example, a computer system arranged to dynamically allocate sensor devices may include processing circuitry of the sensor devices themselves. For example, the computations necessary to dynamically allocate a fleet of UAVs may be performed in a distributed manner by the onboard processing circuitry of the UAVs. In some examples, a domain may have a spatial dimension and a temporal dimension. In this case, the methods described herein provide a means of determining when and where to allocate sensor devices. For example, in surveillance applications, sensor devices may only be deployed at certain locations within a region, at certain times of night. In some examples, the rate at which events occur may be expected to change occasionally, in which case one of the methods described herein may be combined with a change-detection mechanism, and the method may reset or otherwise be altered when such a change is detected.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method for arranging one or more sensor devices for detecting events within a domain having one or more dimensions, the method comprising iteratively:

   determining a plurality of portions spanning the domain;
   estimating a normalised rate of events being detected in each portion;
   selecting, in dependence on the estimated normalised rates, one or more of the determined portions on the basis of an expected reward associated with allocating the one or more sensor devices to the selected one or more portions;
   arranging the one or more sensor devices to detect events in the selected one or more portions; and
   receiving event data from the one or more sensor devices, the event data being indicative of dimensional coordinates of events detected by the one or more sensor devices within the selected one or more portions,

   wherein the expected reward depends on an expected rate of events being detected by the one or more sensor devices, penalised by a sensing cost associated with the arrangement of the one or more sensor devices, and wherein the number of determined portions increases with respect to the number of iterations in accordance with a predetermined relationship.

2. The method of claim 1, wherein estimating the normalised rate of events being detected in a portion comprises:

   determining a probability distribution for the normalised rate of events being detected in the portion; and
   sampling, in accordance with the the determined probability distribution, a normalised rate of events being detected in the portion.

3. The method of claim 2, wherein determining the probability distribution for the normalised rate of events being detected in the portion comprises:

   determining first data comprising a count of the cumulative number of events detected by the one or more sensor devices within the portion;
determining second data comprising a count of the number of iterations for which one of the one or more sensor devices has been allocated to the portion; and
processing the first data and the second data to determine the probability distribution for the normalised rate of events being detected in the portion.

4. The method of claim 2, wherein the determined probability distribution is a gamma distribution.

5. The method of claim 2, wherein determining the probability distribution for the normalised rate of events being detected in the portion comprises:

   initialising a prior Gaussian process for a latent function defined over the domain, the latent function being related to a rate of events occurring within the domain in accordance with a predetermined functional relationship;
   conditioning the prior Gaussian process on event data indicative of dimensional co-ordinates of events detected by the one or more sensor devices, to determine a posterior Gaussian process;
   evaluating the posterior Gaussian process within the portion to determine a respective latent distribution; and
   determining, from the respective latent distribution and the predetermined functional relationship, the respective probability distribution for the normalised rate of events being detected in the portion.

6. The method of any preceding claim, wherein selecting the one or more portions comprises:

   determining a plurality of continuous subdomains, each comprising one or more of the determined portions;
   computing, using the estimated normalised rates of events being detected in the determined one or more portions, a respective expected reward associated with allocating an individual sensor device to each of the determined subdomains; and
   selecting, using the computed respective estimated rewards, one or more of the determined subdomains.

7. The method of any preceding claim, wherein the number of determined portions increases with respect to the number of iterations in accordance with a sublinear relationship.

8. The method of any preceding claim, wherein the sensing cost is proportional to a total extent of the selected one or more portions.

9. The method of any preceding claim, wherein the domain comprises one or more spatial dimensions.

10. The method of any preceding claim, wherein each of the one or more sensor devices comprises an image sensing device.

11. The method of any preceding claim, wherein each of the one or more sensor devices is an unmanned aerial vehicle (UAV).

12. The method of any preceding claim, comprising determining that the estimated normalised rate of events being detected in each portion has converged.

13. A system for detecting events within a domain having one or more dimensions, the system comprising:

   one or more sensor devices operable to detect events within the domain; and
   a computer system communicatively coupled to each of the one or more sensor devices and operable to iteratively:

      determine a plurality portions spanning the domain;
      estimate, for each of the determined portions, a normalised rate of events being detected in the portion;
      select, in dependence on the estimated normalised rates, one or more of the determined portions on the basis of an expected reward associated with allocating the one or more sensor devices to the selected one or more portions;
      arrange the one or more sensor devices to detect events in the selected one or more portions; and
      receive event data from the one or more sensor devices, the event data being indicative of dimensional co-ordinates of events detected by the one or more sensor devices within the selected one or more portions,

wherein the expected reward depends on an expected rate of events being detected by the one or more sensor devices, penalised by a sensing cost associated with the arrangement of the one or more sensor devices, and wherein the number of determined portions increases with respect to the number of iterations in accordance with a predetermined relationship.

14. A computer system for controlling one or more sensor devices for detecting events within a domain having one or more dimensions, wherein the computer system is operable to iteratively:

determine a plurality portions spanning the domain;
estimate, for each of the determined portions, a normalised rate of events being detected in the portion;
select, in dependence on the estimated normalised rates, one or more of the determined portions on the basis of an expected reward associated with allocating the one or more sensor devices to the selected one or more portions;
arrange the one or more sensor devices to detect events in the selected one or more portions; and
receive event data from the one or more sensor devices, the event data being indicative of dimensional co-ordinates of events detected by the one or more sensor devices within the selected one or more portions,

wherein the expected reward depends on an expected rate of events being detected by the one or more sensor devices, penalised by a sensing cost associated with the arrangement of the one or more sensor devices, and wherein the number of determined portions increases with respect to the number of iterations in accordance with a predetermined relationship.

15. A computer program product comprising machine-readable instructions which, when executed by processing circuitry of a computer system, cause the computer system to perform the method of any of claims 1 to 12.

**Fig. 1**

**Fig. 2**

**Fig. 3**

```
┌─────────────────────────────────┐
│   Determine portions of domain  │ ⟍ S402
└─────────────────────────────────┘
                │
                ▼
┌─────────────────────────────────┐
│  Estimate average rate of events│
│  being detected in each portion │ ⟍ S404
└─────────────────────────────────┘
                │
                ▼
┌─────────────────────────────────┐
│   Select portion(s) on basis of │
│        expected reward          │ ⟍ S406
└─────────────────────────────────┘
                │
                ▼
┌─────────────────────────────────┐
│  Arrange sensor devices to detect│
│    events in selected portion(s)│ ⟍ S408
└─────────────────────────────────┘
                │
                ▼
┌─────────────────────────────────┐
│       Receive event data        │
└─────────────────────────────────┘ ⟍ S410
```

At each time step

# Fig. 4

$t = 1$

$D$

$W$

$t = t_1$

$W/2$

$t = t_2$

$W/4$

$t = t_3$

$W/8$

**Fig. 5**

**Fig. 6**

**Fig. 7**

Determine count of cumulative number of events detected by sensors in portion — S802

Determine count of number of time steps for which a sensor device has been allocated to portion — S804

Determine probability distribution for average rate of events being detected in portion — S806

Sample average rate from determined probability distribution — S808

# Fig. 8

Initialise prior Gaussian process for latent function defined over domain — S902

Condition prior distribution on event data to determine posterior Gaussian process — S904

Evaluate posterior Gaussian process within each portion, to determine respective posterior distributions for the latent function evaluated within each portion — S906

Determine, from respective posterior distributions for latent function evaluations, respective posterior distributions for average rate of events being detected — S908

Sample average rates from determined posterior distributions — S910

**Fig. 9**

Fig. 10

**Fig. 11**

Europäisches
Patentamt

European
Patent Office

Office européen
des brevets

# EUROPEAN SEARCH REPORT

Application Number

EP 20 21 0480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JAMES A GRANT ET AL: "Adaptive Policies for Perimeter Surveillance Problems", ARXIV.ORG, CORNELL UNIVERSITY LIBRARY, 201 OLIN LIBRARY CORNELL UNIVERSITY ITHACA, NY 14853, 4 October 2018 (2018-10-04), XP081057440, * the whole document * | 1-15 | INV. G06K9/00 G06Q10/06 |
| Y | M P WAND: "Data-Based Choice of Histogram Bin Width", THE AMERICAN STATISTICIAN, vol. 51, no. 2, February 1997 (1997-02), pages 59-64, XP055624653, * Sect. 1 * | 1-15 | |
| Y | ANDREAS KRAUSE ET AL: "Near-Optimal Sensor Placements in Gaussian Processes: Theory, Efficient Algorithms and Empirical Studies", JOURNAL OF MACHINE LEARNING RESEARCH, MIT PRESS, CAMBRIDGE, MA, US, vol. 9, June 2008 (2008-06), pages 235-284, XP058246451, ISSN: 1532-4435 * abstract * * Sect. 2.2 * * figures 1,11 * | 5 | |

TECHNICAL FIELDS
SEARCHED      (IPC)

G06K
G06Q

-/--

The present search report has been drawn up for all claims

| Place of search | Date of completion of the search | Examiner |
|---|---|---|
| The Hague | 7 April 2021 | Hermes, Lothar |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 20 21 0480

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALAN JULIAN IZENMAN: "Review Papers: Recent Developments in Nonparametric Density Estimation", JOURNAL OF THE AMERICAN STATISTICAL ASSOCIATION., vol. 86, no. 413, March 1991 (1991-03), pages 205-224, XP055624589, US ISSN: 0162-1459, DOI: 10.1080/01621459.1991.10475021 * Sect. 3.3 * | 1,13-15 | |
| A | AFSHIN GHOLAMY ET AL: "What is the optimal bin size of a histogram: An informal description", INTERNATIONAL MATHEMATICAL FORUM, vol. 12, no. 15, December 2017 (2017-12), pages 731-736, XP055624649, DOI: 10.12988/imf.2017.7757 * abstract * * page 736 * | 1,13-15 | |
| A | US 10 037 041 B2 (BIO CELLULAR DESIGN AERONAUTICS INC [US] ET AL.) 31 July 2018 (2018-07-31) * column 3, line 6 - column 5, line 44 * * figure 1 * | 1-15 | |
| A | RAJU MATTIKALLI ET AL: "Optimal Sensor Selection and Placement for Perimeter Defense", AUTOMATION SCIENCE AND ENGINEERING, 2007. CASE 2007. IEEE INTERNATIONA L CONFERENCE ON, IEEE, PI, September 2007 (2007-09), pages 911-918, XP031141659, ISBN: 978-1-4244-1153-5 * abstract * | 1-15 | |

TECHNICAL FIELDS
SEARCHED     (IPC)

-/--

The present search report has been drawn up for all claims

| Place of search | Date of completion of the search | Examiner |
|---|---|---|
| The Hague | 7 April 2021 | Hermes, Lothar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NOVELLA BARTOLINI ET AL: "Mobile Sensor Deployment in Unknown Fields", INFOCOM, 2010 PROCEEDINGS IEEE, IEEE, PISCATAWAY, NJ, USA, 14 March 2010 (2010-03-14), pages 1-5, XP031675072, ISBN: 978-1-4244-5836-3 * the whole document * | 1-15 | |

-----

TECHNICAL FIELDS
SEARCHED      (IPC)

The present search report has been drawn up for all claims

| Place of search | Date of completion of the search | Examiner |
|---|---|---|
| The Hague | 7 April 2021 | Hermes, Lothar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 0480

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2021

| Patent document cited in search report | Publication date | Patent family member(s) | Publication date |
|---|---|---|---|
| US 10037041 B2 | 31-07-2018 | NONE | |

EPO FORM P0459

For more details about this annex : see Official Journal of the European Patent Office, No. 12/82